# EUROPEAN PATENT SPECIFICATION

(11) **EP 2 758 645 B1**
(45) Date of publication and mention of the grant of the patent: **06.01.2016**
(21) Application number: 12801648.2
(22) Date of filing: 14.09.2012
(51) Int. Cl.: F01N 3/20, F01N 11/00

(54) **METHOD PERTAINING TO AN SCR SYSTEM AND AN SCR SYSTEM**
VERFAHREN FÜR EIN SCR-SYSTEM UND SCR-SYSTEM
PROCÉDÉ RELATIF À UN SYSTÈME DE RÉDUCTION CATALYTIQUE SÉLECTIVE (RCS) ET SYSTÈME RCS

(30) Priority: 22.09.2011 SE 1150862
(43) Date of publication of application: 30.07.2014
(73) Proprietor: Scania CV AB, 151 87 Södertälje (SE)
(72) Inventor: BREMBERG, Per, 151 60 Södertälje (SE); LILJESTRAND, Andreas, 151 45 Södertälje (SE)
(74) Representative: Scania CV AB
(86) International application number: PCT/SE2012/050970
(87) International publication number: WO 2013/043105

(56) References cited:
- US-A1- 2005 235 632

## Description

### TECHNICAL FIELD

The present invention relates to a method pertaining to an SCR system for exhaust cleaning, whereby reducing agent is supplied to a feed device which supplies it to a dosing unit for batched supply of reducing agent by means of a valve arrangement at a consumption point in the SCR system.

The invention relates also to a computer programme product comprising programme code for a computer for implementing a method in accordance with the invention. The invention relates also to an SCR system and a motor vehicle equipped with the SCR system.

### BACKGROUND

Vehicles today use, for example, urea as reductant in SCR (selective catalytic reduction) systems which comprise an SCR catalyst in which said reductant and NOx gas can react and be converted to nitrogen gas and water (see US2005/235632). Various types of reductants may be used in SCR systems. AdBlue is an example of a commonly used reductant.

One type of SCR system comprises a container which holds a reductant. The SCR system has also a pump adapted to drawing said reductant from the container via a suction hose and supplying it via a pressure hose to a dosing unit situated adjacent to an exhaust system of the vehicle, e.g. adjacent to an exhaust pipe of the exhaust system. The dosing unit is adapted to injecting a necessary amount of reductant into the exhaust pipe upstream of the SCR catalyst by means of a valve arrangement according to running routines which are stored in a control unit of the vehicle. To make it easier to regulate the pressure when no or only small amounts are dosed, the system comprises also a return hose which runs back to the container from a pressure side of the system.

In a first example, a service life of a dosing unit is defined as a predetermined amount of time. A replacement interval for the dosing unit may thus be a fixed period of time, e.g. two years.

In a second example, a service life of a dosing unit is defined as a predetermined distance travelled and it is recommended that it be replaced after a certain number of kilometres travelled. In certain cases these recommendations are implemented as a service operation for the respective vehicle whereby service staff check how many kilometres it has run since the latest change of dosing unit.

In a third example, a service life of a dosing unit is defined as a predetermined period of use and it is recommended that it be replaced after a predetermined period of use, e.g. 25,000 hours.

Certain types of dosing units are adapted to dosing of reducing agent at a predetermined cycle rate. A usual cycle rate is 1 Hz, but on certain vehicles, e.g. those run with periodically high loads, it is desirable to control dosing according to a higher cycle rate, e.g. 2, 4, 10 or 20 Hz. During each cycle, dosing may take place at any desired interval of time, e.g. 0.2 or 0.5 second, or throughout the cycle, i.e. 1 second where the cycle rate is 1 Hz. Alternatively it may be desirable to use a lower cycle rate, e.g. 0.5 Hz, in certain applications.

### SUMMARY OF THE INVENTION

Altering the dosing unit's cycle rate from, for example, a basic setting of 1 Hz, to, for example, 2 Hz, affects its expected service life.

In the light of the foregoing there is therefore a need to improve today's SCR systems by reducing or eliminating the shortcomings described above. It is desirable to provide an SCR system which can be adapted to a cycle rate which differs from a standard value, e.g. 1 Hz.

One object of the present invention is to propose a novel and advantageous method pertaining to an SCR system.

Another object of the invention is to propose a novel and advantageous SCR system for exhaust cleaning and a novel and advantageous computer programme pertaining to an SCR system.

A further object of the invention is to propose a method, an SCR system and a computer programme for achieving a robust way of optimising a replacement interval for a dosing unit which may have any desired discrete cycle rate.

A further object of the invention is to propose a method, an SCR system and a computer programme for reducing a risk of an SCR system's performance deteriorating too much over time.

A further object of the invention is to propose a method, an SCR system and a computer programme for achieving in a cost-effective way improved performance of an SCR system, resulting in optimised use of a dosing unit for reducing agent in said SCR system.

A further object of the invention is to propose a method, an SCR system and a computer programme for achieving in a cost-effective and user-friendly way an improved SCR system in which a cycle rate of the dosing unit can be altered between different fixed values.

A further object of the invention is to propose an alternative method, an alternative SCR system and an alternative computer programme for achieving improved performance of an SCR system.

These objects are achieved with a method pertaining to SCR systems for exhaust cleaning according to claim 1.

One aspect of the invention is a proposed method pertaining to an SCR system for exhaust cleaning, whereby reducing agent is supplied to a feed device which supplies it to a dosing unit for batched supply of reducing agent by means of a valve arrangement at a consumption point in the SCR system. The method comprises the steps of
- continuously determining the cumulative number of doses injected by said dosing unit,
- continuously comparing said cumulative number of doses injected with a predetermined numerical value, and
- delivering an indication when said cumulative number of doses injected exceeds said predetermined numerical value.

The advantageous result is an SCR system in which a replacement interval for the dosing unit is variable.

One aspect of the invention proposes a function for optimising a replacement interval for the dosing unit on the basis of an SCR system's cumulative number of doses injected since the latest change of dosing unit. After a change of dosing unit, a variable which indicates the cumulative number of doses injected may be zeroed. The zeroing of said variable may be effected manually, e.g. by service staff or an operator of the SCR system. It may alternatively be effected automatically by appropriate configuration.

An advantage of the present invention is that a replacement interval for the dosing unit is optimised for vehicles in which a cycle rate of the dosing unit is altered between different fixed values, which means that the dosing unit can be replaced or renovated at a suitable amount of wear or point in time.

An advantage of the present invention is that it reduces or minimises an extra cost associated with dosing unit changes which take place early as a result of a fixed replacement interval for the dosing unit.

An advantage of the present invention is the possibility of reducing or minimising a deterioration in performance which is related to the dosing unit being replaced late because of a cycle rate which is for example set to a higher value.

One aspect of the invention makes it possible with advantage to determine precisely and in a cost-effective way whether the dosing unit needs changing. The predetermined numerical value may be specific to the respective application. In one example it is 100,000,000, in another example 1,000,000. In one version it may be within a range defined by [100,000,000, 200,000,000]. It may be chosen on the basis of the configuration and performance of the dosing unit's valve arrangement.

By comparing the value which represents the cumulative number of doses injected by the dosing unit and the predetermined numerical value it is possible to determine whether the dosing unit is likely to be so functionally degraded as to need changing in an immediate future or whether its replacement can wait until a future planned service of the SCR system.

The method may further comprise the step of - determining a need for overhaul of the dosing unit's valve arrangement after said indication has been delivered. Service staff may thus be provided with information about an amount of wear of the valve arrangement and decide whether the dosing unit needs changing immediately or whether its replacement can wait until a scheduled service operation.

The cumulative number of doses injected may correspond to the number of switches between an open state and a closed state of the dosing unit's valve arrangement which causes a certain amount of wear of said valve arrangement. This wear may for example be due to mechanical friction between a pin of the valve arrangement and a seat of the dosing unit and may occur on the pin or at the inlet for dosing of reducing agent in the exhaust system.

In one embodiment, the valve arrangement of the dosing unit has a pin which can be moved in a longitudinal direction between a first (closed) position and a second (open) position. In the closed position the pin seals an inlet to the exhaust system, thereby preventing dosing of reducing agent. The open position allows dosing, which is achieved by pressurisation of the reducing agent. Other versions of the valve arrangement may of course be possible. In one example, an inlet for dosing of reducing agent in the exhaust system may be alternately closable by means of a plate arranged for sliding. In a number of different versions of the valve arrangement, mechanical wear will occur over time on the basis of the cumulative number of doses of reducing agent injected. In such cases said wear occurs during intermittent dosing of reducing agent.

Said predetermined numerical value may be based on an empirically determined expected service life of the dosing unit's valve arrangement. This results in a method whereby the dosing unit's expected service life can be determined rather precisely, making it possible to optimise a replacement interval for it, potentially leading to cost savings and positive effects on the SCR system's performance.

Said predetermined numerical value may be based on a value arrived at by practical tests of the dosing unit's valve arrangement.

Said predetermined numerical value may be based on a value arrived at by theoretical calculation according to appropriate models.

Said reducing agent may be a urea-based reducing agent, e.g. so-called AdBlue or the like.

The method may further comprise the step of - changing or renovating said dosing unit after said indication has been delivered. Said changing or renovation of the dosing unit may be done manually. Providing an indication according to the invention results in a user-friendly method according to the invention, making it easy for service staff to assess whether the dosing unit needs changing or renovating.

An advantage of the innovative method is improved performance of the SCR system. The fact that a replacement interval for the dosing unit can be optimised minimises the risk of leakage due to wear of the valve arrangement. The SCR system's performance is also improved in that there will be no risk of deterioration of a reducing agent dosing pattern because of too much wear of the valve arrangement.

The method may further comprise the step of activating an indicating configuration, which may be an illuminated device for signalling that it is time to change the SCR system's dosing unit. The illuminated device may be situated adjacent to the SCR system or in a cab of a vehicle which is provided with said SCR system. In one example a red lamp lights up when the cumulative number of doses injected by the dosing unit is found to exceed the predetermined numerical value.

In another example an indicating configuration is activated in a control unit of the SCR system. In one version this may take the form of a so-called flag in a computer programme stored in the control unit, which flag indicates that it is time to change the SCR system's dosing unit. This flag may for example be detected by staff servicing or inspecting the SCR system.

In one version said cumulative number of doses injected may be zeroed after a change of dosing unit. The result is a user-friendly and inexpensive way of restarting the innovative method after a dosing unit change has taken place.

In one version the present invention is applicable on SCR systems in which the cycle rate of the dosing unit is variable, making it possible for a cycle rate to be altered continuously as appropriate. In one example, four consecutive cycles for the dosing unit might be 1 second, 2 seconds, 0.5 second and 0.75 second. During each cycle, where appropriate, dosing of reducing agent for a certain duration may take place. In such cases the control unit is adapted to continuously determining a suitable prevailing cycle rate of the dosing unit. The control unit is adapted to suitably determining continuously in a suitable way a prevailing cycle rate of the dosing unit. As the present invention is based on using the number of doses injected by the dosing unit, the above objects are achieved irrespective of its cycle rate. The result is a versatile method pertaining to an SCR system according to the invention.

In one version the present invention is applicable on SCR systems in which the cycle rate of the dosing unit is variable whereby different discrete steps of the cycle rate are used. This means that a cycle rate can be altered between different levels as appropriate. Accordingly, a specific level of the cycle rate may be used for quite a long time, e.g. for a day or a week or a number of months. In one example, three different levels of the cycle rate for the dosing unit might be 1 Hz, 5 Hz and 20 Hz. During each cycle at each level, dosing of reducing agent may take place as appropriate. As the present invention is based on using the number of doses injected by the dosing unit, the above objects are achieved irrespective of said discrete levels of its cycle rate. The result is a versatile method pertaining to an SCR system according to the invention.

One aspect of the invention is a proposed SCR system for exhaust cleaning, whereby reducing agent is supplied to a feed device which supplies it to a dosing unit for batched supply of reducing agent by means of a valve arrangement at a consumption point in the SCR system. The system comprises
- means for continuously determining the cumulative number of doses injected by said dosing unit,
- means for continuously comparing said cumulative number of doses injected with a predetermined numerical value, and
- means for delivering an indication when said cumulative number of doses injected exceeds said predetermined numerical value.

The SCR system may further comprise
- means for determining a need for overhaul of the dosing unit's valve arrangement after said indication has been delivered.

The cumulative number of doses injected may correspond to the number of switches between an open state and a closed state of the dosing unit's valve arrangement which causes a certain amount of wear of said valve arrangement.

In the SCR system said predetermined numerical value may be based on an empirically determined expected service life of the dosing unit's valve arrangement.

In the SCR system said reducing agent may be a urea-based reducing agent.

Said dosing unit may take the form of a replaceable unit.

Said valve arrangement takes the form of a replaceable unit situated in said dosing unit.

The above objects are also achieved with a motor vehicle which is provided with the SCR system, in one aspect of the invention. The vehicle may be a truck, bus or car.

One aspect of the invention is a proposed computer programme pertaining to an SCR system for exhaust cleaning, whereby reducing agent is supplied to a feed device which supplies it to a dosing unit for batched supply of reducing agent by means of a valve arrangement at a consumption point in the SCR system, which programme comprises programme code stored on a computer-readable medium for causing an electronic control unit or another computer connected to the electronic control unit to perform steps according to any one of claims 1-6.

One aspect of the invention is a proposed computer programme pertaining to an SCR system for exhaust cleaning, whereby reducing agent is supplied to a feed device which supplies it to a dosing unit for batched supply of reducing agent by means of a valve arrangement at a consumption point in the SCR system, which programme comprises programme code for causing an electronic control unit or another computer connected to the electronic control unit to perform steps according to any one of claims 1-6.

One aspect of the invention is a proposed computer programme product comprising a programme code stored on a computer-readable medium for performing method steps according to any one of claims 1-6 when said computer programme is run on an electronic control unit or another computer connected to the electronic control unit.

The method according to the invention is easy to implement in existing motor vehicles. Software for said method pertaining to an SCR system for exhaust cleaning, whereby reducing agent is supplied to a feed device which supplies it to a dosing unit for batched supply of reducing agent by means of a valve arrangement at a consumption point in the SCR system according to the invention, may be installed in a control unit of the vehicle during the manufacture of the vehicle. A purchaser of the vehicle may thus have the possibility of selecting the function of the method as an option. Alternatively, software which comprises programme code for applying the innovative method to an SCR system may be installed in a control unit of the vehicle on the occasion of upgrading at a service station, in which case the software may be loaded into a memory in the control unit. Implementing the innovative method is thus cost-effective. Software which comprises programme code for said method pertaining to an SCR system is easy to update or replace. Moreover, different parts of the software which comprise programme code for said method pertaining to an SCR system may be replaced independently of one another. This modular configuration is advantageous from a maintenance perspective.

Further objects, advantages and novel features of the present invention will become apparent to one skilled in the art from the following details, and also by putting the invention into practice. Whereas the invention is described below, it should be noted that it is not confined to the specific details described. One skilled in the art having access to the teachings herein will recognise further applications, modifications and incorporations within other fields, which are within the scope of the invention.

### BRIEF DESCRIPTION OF THE DRAWINGS

For fuller understanding of the present invention and its further objects and advantages, the detailed description set out below should be read in conjunction with the accompanying drawings, in which the same reference notations pertain to similar items in the various diagrams and
Figure 1 schematically illustrates a vehicle according to an embodiment of the invention,
Figure 2 schematically illustrates a subsystem for the vehicle depicted in Figure 1, according to an embodiment of the invention,
Figure 3 schematically illustrates a dosing unit according to an embodiment of the invention,
Figure 4a is a schematic flowchart of a method according to an embodiment of the invention,
Figure 4b is a more detailed schematic flowchart of a method according to an embodiment of the invention, and
Figure 5 schematically illustrates a computer according to an embodiment of the invention.

### DETAILED DESCRIPTION OF THE DRAWINGS

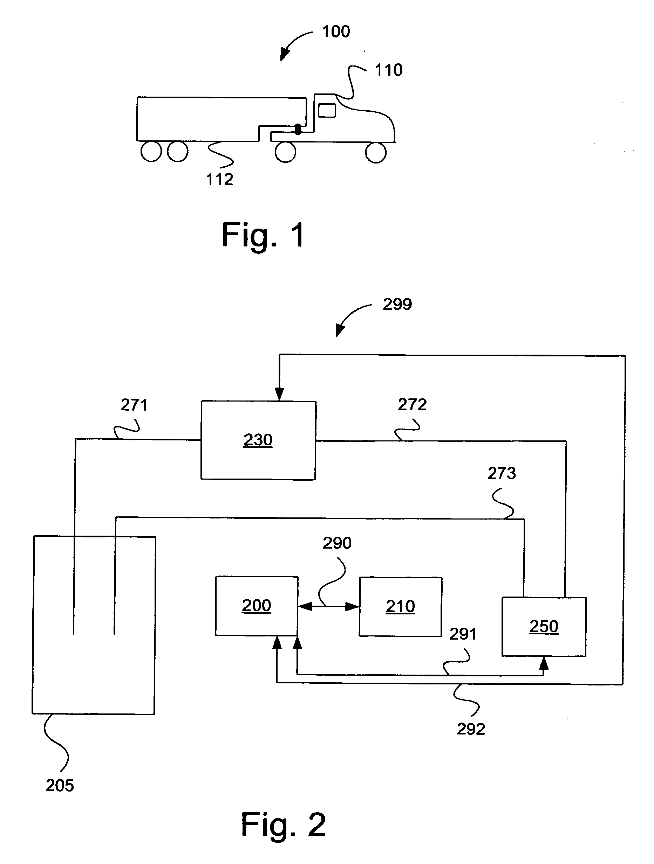

Figure 1 depicts a side view of a vehicle 100. The vehicle here exemplified comprises a tractor unit 110 and a semitrailer 112. The vehicle may be a heavy vehicle, e.g. a truck or a bus. It may alternatively be a car.

It should be noted that the invention is suitable for application in any SCR system and is therefore not restricted to SCR systems of motor vehicles. The innovative method and the innovative SCR system according to one aspect of the invention are well suited to other platforms which comprise an SCR system, e.g. watercraft. The watercraft may be of any kind, e.g. motorboats, steamers, ferries or ships.

The innovative method and the innovative SCR system according to one aspect of the invention are for example also well suited to systems which comprise industrial engines and/or engine-powered industrial robots.

The innovative method and the innovative SCR system according to one aspect of the invention are also well suited to various kinds of power plants, e.g. an electric power plant provided with a diesel generator.

The innovative method and the innovative SCR system are well suited to any engine system which comprises an engine and an SCR system, e.g. on a locomotive or some other platform.

The innovative method and the innovative SCR system are well suited to any system which comprises an NOₓ generator and an SCR system.

The term "link" refers herein to a communication link which may be a physical connection such as an opto-electronic communication line, or a non-physical connection such as a wireless connection, e.g. a radio link or microwave link.

The term "line" refers herein to a passage for holding and conveying a fluid, e.g. a reductant in liquid form. The line may be a pipe of any size and may be made of any suitable material, e.g. plastic, rubber or metal.

The term "reductant" or "reducing agent" refers herein to an agent used for reacting with certain emissions in an SCR system. These emissions may for example be NOx gas. The terms "reductant" and "reducing agent" are herein used synonymously. Other kinds of reductants may of course be used. AdBlue is herein cited as an example of a reductant, but one skilled in the art will appreciate that the innovative method and the innovative device are feasible with other types of reductants.

Figure 2 depicts a subsystem 299 of the vehicle 100. This subsystem is situated in the tractor unit 110. It may be part of an SCR system. It comprises in this example a container 205 arranged to hold a reductant. This container is adapted to containing a suitable amount of reductant and also to being replenishable as necessary.

A first line 271 is provided to lead the reductant to a pump 230 from the container 205. The pump 230 may be any suitable pump. It may be a diaphragm pump.

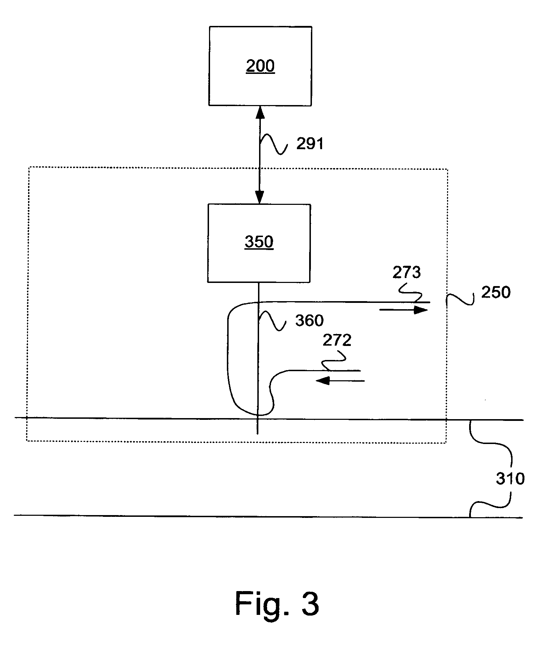

The pump 230 is adapted to being driven by an electric motor (not depicted). It is adapted to drawing reductant from the container 205 via the first line 271 and to supplying it via a second line 272 to a dosing unit 250. The dosing unit comprises an electrically controlled dosing valve by means of which a flow of reductant added to the exhaust system can be controlled. The pump 230 is adapted to pressurising the reductant in the second line 272. The dosing unit 250 is provided with a throttle unit against which said pressure of the reductant builds up in the subsystem 299. The dosing unit is described in more detail with reference to Figure 3.

The dosing unit 250 is adapted to supplying said reductant to an exhaust system (see Figure 3) of the vehicle 100. More specifically, it is adapted to supplying a suitable amount of reductant in a controlled way to an exhaust system of the vehicle. In this version, an SCR catalyst (not depicted) is provided downstream of a location in the exhaust system where the supply of reductant is effected. The amount of reductant supplied in the exhaust system is intended to be used in the SCR catalyst to reduce the amount of unacceptable emissions.

The dosing unit 250 is situated adjacent to, for example, an exhaust pipe which is provided to lead exhaust gases from a combustion engine (not depicted) of the vehicle 100 to the SCR catalyst.

A third line 273 runs between the dosing unit 250 and the container 205 to lead reducing agent not dosed by the dosing unit back to the container. This configuration achieves with advantage cooling of the dosing unit which is thus cooled by a flow of reductant pumped through it from the pump 230 to the container.

The first control unit 200 is arranged for communication with the pump 230 via a link 292 and is adapted to controlling the operation of the pump in order, for example, to regulate the flow of reductant within the subsystem 299. It is adapted to controlling an operating power of the pump by regulating the associated electric motor.

The first control unit 200 is arranged for communication with the dosing unit 250 via a link 291 and is adapted to controlling the operation of the dosing unit in order, for example, to regulate the supply of reductant to the vehicle's exhaust system. Dosing of reducing agent takes place on the basis of a specific cycle rate. During each cycle a dosing valve of the dosing unit may be open for an appropriate amount of time.

The first control unit 200 is adapted to continuously determining a cumulative number of doses injected by the dosing unit 250, to comparing said cumulative number of doses injected N with a predetermined numerical value TH and to deciding whether said cumulative number of doses injected N exceeds the predetermined numerical value TH.

The first control unit 200 is adapted to delivering an indication when said cumulative number of doses injected N exceeds said predetermined numerical value TH. There are various ways in which this may be done.

In one example the control unit may send to an instrument panel in the vehicle's driving cab an information signal which may contain information about it being appropriate to change the dosing unit within a certain amount of time. This information may be conveyed to a driver by a display means, e.g. a viewing screen or a lamp.

In another example the control unit may deliver an indication generated in the form of a fault code which can be used for suitably indicating to a driver or service staff that the dosing unit needs changing or renovating.

In another example the control unit may deliver an indication generated in a memory of the control unit in the form of a so-called flag which can be detected by an operator carrying out checking of the vehicle, e.g. on the occasion of servicing.

A second control unit 210 is arranged for communication with the first control unit 200 via a link 290. This second control unit may be detachably connected to the first control unit. It may be a control unit external to the vehicle. It may be adapted to performing the innovative method steps according to the invention. It may be used to cross-load software to the first control unit, particularly software for applying the innovative method. It may alternatively be arranged for communication with the first control unit via an internal network on board the vehicle. It may be adapted to performing substantially similar functions to those of the first control unit, e.g. continuously determining the cumulative number of doses injected by said dosing unit, continuously comparing said cumulative number of doses injected with a predetermined numerical value and delivering an indication when said cumulative number of doses injected exceeds said predetermined numerical value. The innovative method may be applied by either the first control unit or the second control unit or by both of them.

Figure 3 illustrates a subsystem which comprises the dosing unit 250. It depicts the second line 272 and the third line 273.

In this version the dosing unit 250 comprises a valve arrangement 350 which may be provided with an electronic control card adapted, for example, to handling communication with the first control unit 200. The control unit 200 is arranged for communication with the valve arrangement 350 via the link 291. The valve arrangement is further provided with a pin 360 which is arranged for sliding in the dosing unit. This pin is adapted to alternately closing and opening an inlet to an exhaust pipe 310 of the SCR system, and this exhaust pipe is adapted to leading exhaust gases from an engine to the SCR system's surroundings. The valve arrangement 350 is adapted to responding to signals received from the first control unit 200 via the link 291 by alternately moving the pin 360 to and fro in a longitudinal direction thereof in order to effect the dosing of reductant into the exhaust pipe 310.

The valve arrangement 350 may be in a closed state in which the pin 360 is in such a position that dosing is not possible, i.e. a position in which it closes the inlet to the exhaust system. The valve arrangement may be in an open state in which the pin is in such a position that dosing takes place, i.e. in which it does not close the inlet to the exhaust system and dosing is effected by the pressure built up by the pump 230 in the second line 272.

According to the invention the cumulative number of doses injected is determined to make it possible to decide whether it is time for the dosing unit to be changed because of wear. Each movement of the pin 360 from the closed state to the open state and back to the closed state counts as one dose. Reducing agent is thus dosed over the period of time when the pin does not close the inlet to the exhaust pipe 310.

One aspect of the invention proposes a variable replacement interval for the dosing unit 250 in order to compensate in a flexible way for wear caused by the pin's alternate movements.

It should be noted that the invention is not confined to the specific version which comprises said valve arrangement provided with the pin 360 to effect dosing of reducing agent. The invention is applicable on a number of different types of valve arrangement in which wear due for example to friction affects the valve arrangement's performance over time. The wear may occur on a seat of the valve arrangement. It may be caused by a flow of reducing agent at high pressure.

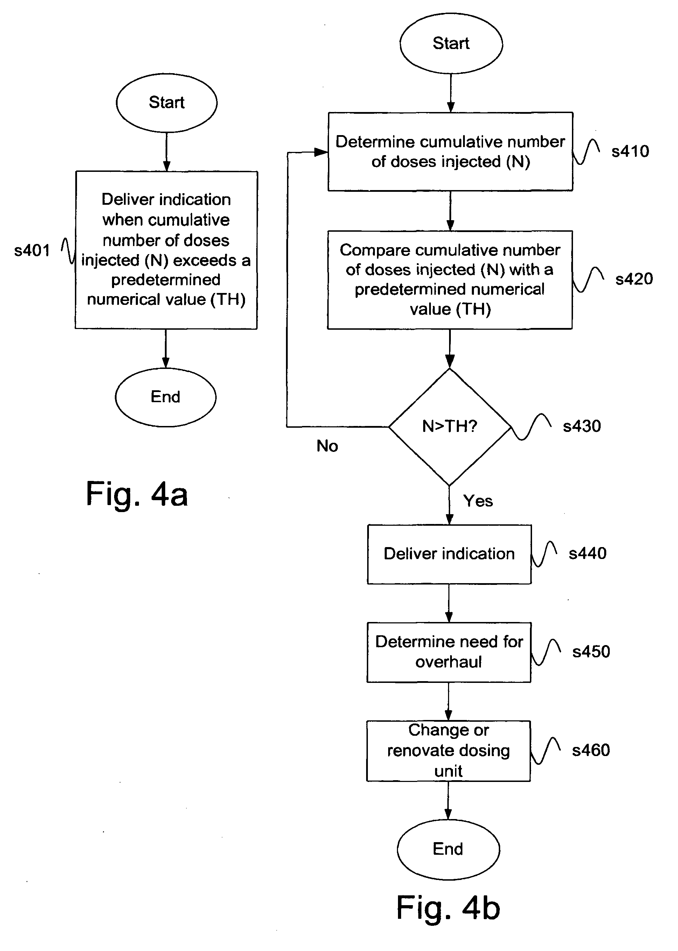

Figure 4a is a schematic flowchart of a method pertaining to an SCR system for exhaust cleaning, whereby reducing agent is supplied to a feed device which supplies it to a dosing unit for batched supply of reducing agent by means of a valve arrangement at a consumption point in the SCR system, in one embodiment of the invention. The method comprises a first step s401 comprising the steps of
- continuously determining the cumulative number of doses injected by said dosing unit,
- continuously comparing said cumulative number of doses injected with a predetermined numerical value, and
- delivering an indication when said cumulative number of doses injected exceeds said predetermined numerical value. The method ends after step s401.

Figure 4b is a schematic flowchart of a method pertaining to an SCR system for exhaust cleaning, whereby reducing agent is supplied to a feed device which supplies it to a dosing unit for batched supply of reducing agent by means of a valve arrangement at a consumption point in the SCR system, in one embodiment of the invention.

The method comprises a first step s410 comprising the step of determining the cumulative number of doses injected N by the dosing unit 250. This may be done by continuously incrementing a variable N in a memory of the first control unit 200. Step s410 is followed by a step s420.

Method step s420 comprises the step of comparing said cumulative number of doses injected N with a predetermined numerical value TH. The result is a quick and robust method for determining whether a change of dosing unit is desirable. The result is a method for determining whether a change of the dosing unit is necessary, which method has the advantage of requiring only a small amount of computing resources. The first control unit 200 is adapted to performing method step s420. Step s420 is followed by a step s430. Method step s430 comprises the step of determining whether said cumulative number of doses injected N exceeds the predetermined numerical value TH. The first control unit 200 is adapted to performing method step s430. Step s430 is followed by a step s440.

Method step s440 comprises the step of delivering an indication when said cumulative number of doses injected exceeds said predetermined numerical value. Said indication may be provided in suitable ways. It may be delivered in the form of an information signal from the first control unit 200 to suitable means, e.g. a viewing screen in the vehicle's driving cab. It may be delivered in the form of auditory and/or visual feedback to an operator of the vehicle. It may alternatively take the form of so-called flagging of the control unit which is for example detectable on the occasion of servicing. Step s440 is followed by a step s450.

Method step s450 comprises the step of determining a need for overhaul of the dosing unit's valve arrangement after said indication has been delivered. Said need for overhaul may be quite urgent or within a predefined period of time, e.g. a day, week or month. Step s450 is followed by a step s460.

Method step s460 comprises the step of changing or renovating said dosing unit after said indication has been delivered. It may comprise the step of manually changing or renovating said dosing unit after said indication has been delivered. After the dosing unit has been replaced by a similar new/unused unit, or after renovation of the existing dosing unit, the numerical value N representing the cumulative number of doses injected may be zeroed. This may for example be done by acting upon the first control unit 200. After zeroing of the numerical value, its incrementing may begin again to optimise a replacement interval for the new or renovated dosing unit. The method ends after step s460.

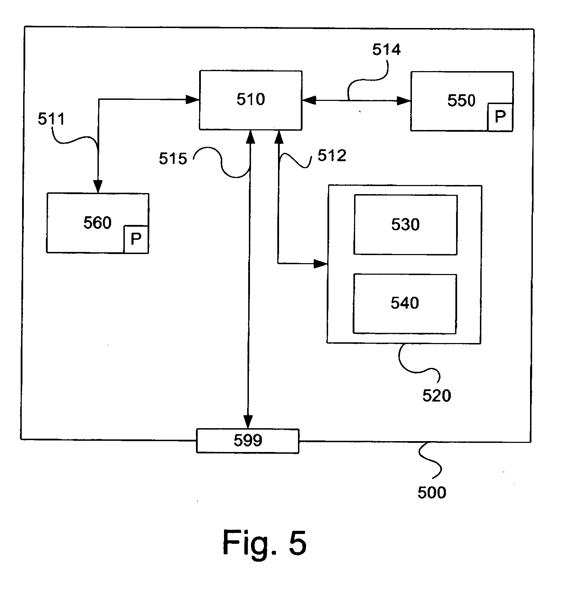

Figure 5 is a diagram of one version of a device 500. The control units 200 and 210 described with reference to Figure 2 may in one version comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

A proposed computer programme P comprises routines for continuously determining the cumulative number of doses injected N by the dosing unit 250. The programme P comprises routines for continuously comparing said cumulative number of doses injected N with a predetermined numerical value TH. It comprises routines for delivering an indication when said cumulative number of doses injected N exceeds said predetermined numerical value TH. It comprises routines for determining a need for overhaul of the dosing unit's valve arrangement 350 after said indication has been delivered. The programme P may be stored in an executable form or in compressed form in a memory 560 and/or in a read/write memory 550.

Where it is stated that the data processing unit 510 performs a certain function, it means that it effects a certain part of the programme which is stored in the memory 560 or a certain part of the programme which is stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is arranged to communicate with the data processing unit via a data bus 514. The links 290, 291 and 292, for example, may be connected to the data port 599 (see Figure 2 and Figure 3).

When data are received on the data port 599, they are stored temporarily in the second memory element 540. The data processing unit 510 will be ready to conduct code execution as described above. The device 500 is adapted to continuously determining a cumulative number of doses injected N by the dosing unit 250. Said cumulative number of doses injected N may be stored in a memory of the device 500, e.g. the memory 550 or the memory 560. Said predetermined numerical value TH may also be stored in a memory of the device 500, e.g. the memory 550 or the memory 560. Said predetermined numerical value may be updated as appropriate. It may be zeroed after a change or renovation of the dosing unit 250.

Parts of the methods herein described may be conducted by the device 500 by means of the data processing unit 510 which runs the programme stored in the memory 560 or the read/write memory 550. When the device 500 runs the programme, methods herein described are executed.

The foregoing description of the preferred embodiments of the present invention is provided for illustrative and descriptive purposes. It is not intended to be exhaustive, nor to limit the invention to the variants described. Many modifications and variations will obviously suggest themselves to one skilled in the art. The embodiments have been chosen and described in order best to explain the principles of the invention and their practical applications and thereby make it possible for one skilled in the art to understand the invention for different embodiments and with the various modifications appropriate to the intended use.

## Claims

1. A method pertaining to an SCR system for exhaust cleaning, whereby reducing agent is supplied to a feed device (230) which supplies it to a dosing unit (250) for batched supply of reducing agent by means of a valve arrangement (350, 360) at a consumption point in the SCR system, **characterised by** the steps of
- continuously determining (s410) the cumulative number of doses injected (N) by said dosing unit (250),
- continuously comparing (s420, s430) said cumulative number of doses injected (N) with a predetermined numerical value (TH), and
- delivering an indication (s440) when said cumulative number of doses injected (N) exceeds said predetermined numerical value (TH).

2. A method according to claim 1, further comprising the step of
- determining a need for overhaul (450) of the dosing unit's valve arrangement (350, 360) after said indication has been delivered.

3. A method according to claim 1 or 2, in which the cumulative number of doses injected (N) corresponds to the number of switches between an open state and a closed state of the dosing unit's valve arrangement (350, 360).

4. A method according to any one of claims 1-3, in which said predetermined numerical value (TH) is based on an expected service life determined for the dosing unit's valve arrangement (350, 360).

5. A method according to any one of the foregoing claims, in which said reducing agent is a urea-based reducing agent.

6. A method according to any one of the foregoing claims, further comprising the step of
- changing or renovating (s460) said dosing unit (250) after said indication has been delivered.

7. An SCR system for exhaust cleaning, whereby reducing agent is supplied to a feed device (230) which supplies it to a dosing unit (250) for batched supply of reducing agent by means of a valve arrangement (350, 360) at a consumption point in the SCR system, **characterised by**
- means (200; 210; 500) for continuously determining the cumulative number of doses injected (N) by said dosing unit,
- means (200; 210; 500) for continuously comparing said cumulative number of doses injected (N) with a predetermined numerical value (TH), and
- means (200; 210; 500) for delivering an indication when said cumulative number of doses injected (N) exceeds said predetermined numerical value (TH).

8. An SCR system according to claim 7, further comprising
- means (200; 210; 500) for determining a need for overhaul of the dosing unit's valve arrangement (350, 360) after said indication has been delivered.

9. An SCR system according to claim 7 or 8, in which the cumulative number of doses injected (N) corresponds to the number of switches between an open state and a closed state of the dosing unit's valve arrangement (350, 360).

10. An SCR system according to any one of claims 7-9, in which said predetermined numerical value (TH) is based on an expected service life determined for the dosing unit's valve arrangement (350, 360).

11. An SCR system according to any one of claims 7-10, in which said reducing agent is a urea-based reducing agent.

12. An SCR system according to any one of claims 7-11, in which said dosing unit (250) takes the form of a replaceable unit.

13. An SCR system according to any one of claims 7-12, in which said valve arrangement (350, 360) takes the form of a replaceable unit in said dosing unit (250).

14. A motor vehicle (100; 110) provided with an SCR system according to any one of claims 7-13.

15. A motor vehicle (100; 110) according to claim 14, which vehicle is any from among truck, bus or car.

16. A computer programme (P) pertaining to SCR systems for exhaust cleaning, which programme (P) comprises programme code stored on a computer-readable medium for causing an electronic control unit (200; 500) or another computer (210; 500) connected to the electronic control unit (200; 500) to perform steps according to any one of claims 1-6.

17. A computer programme product comprising a programme code stored on a computer-readable medium for performing method steps according to any one of claims 1-6 when said computer programme is run on an electronic control unit (200; 500) or another computer (210; 500) connected to the electronic control unit (200; 500).

## Patentansprüche

1. Verfahren für ein SCR-System zum Abgasreinigen, wobei ein Reduktionsmittel einer Zuführeinrichtung (230) zugeführt wird, die dieses einer Dosiereinheit (250) zuführt, zum dosierten Zuführen von Reduktionsmittel mittels einer Ventilanordnung (350, 360) an einem Verbrauchspunkt in dem SCR-System,
**gekennzeichnet durch** die Schritte:
- kontinuierliches Ermitteln (s410) der kumulativen Anzahl von **durch** die Dosiereinheit (250) eingespritzten Dosen (N),
- kontinuierliches Vergleichen (s420, s430) der kumulativen Anzahl von eingespritzten Dosen (N) mit einem vorbestimmten numerischen Wert (TH), und
- Bereitstellen einer Angabe (s440), wenn die kumulative Anzahl von eingespritzten Dosen (N) den vorbestimmten numerischen Wert (TH) überschreitet.

2. Verfahren nach Anspruch 1, das ferner den Schritt umfasst:
- Ermitteln eines Bedarfs einer Instandsetzung (450) der Ventilanordnung (350, 360) der Dosiereinheit, nachdem die Angabe bereitgestellt worden ist.

3. Verfahren nach Anspruch 1 oder 2, bei dem die kumulative Anzahl von eingespritzten Dosen (N) einer Anzahl von Wechseln zwischen einem geöffneten Zustand und einem geschlossenen Zustand der Ventilanordnung (350, 360) der Dosiereinheit entspricht.

4. Verfahren nach einem der Ansprüche 1 bis 3, bei dem der vorbestimmte numerische Wert (TH) auf einer für die Ventilanordnung (350, 360) der Dosiereinheit bestimmten erwarteten Betriebslebensdauer basiert.

5. Verfahren nach einem der vorangehenden Ansprüche, bei dem das Reduktionsmittel ein harnstoffbasiertes Reduktionsmittel ist.

6. Verfahren nach einem der vorangehenden Ansprüche, das ferner den Schritt umfasst:
- Austauschen oder Erneuern (s460) der Dosiereinheit (250), nachdem die Angabe bereitgestellt worden ist.

7. SCR-System zum Abgasreinigen, wobei ein Reduktionsmittel einer Zuführeinrichtung (230) zugeführt wird, die dieses einer Dosiereinheit (250) zuführt, zum dosierten Zuführen von Reduktionsmittel mittels einer Ventilanordnung (350, 360) an einem Verbrauchspunkt in dem SCR-System, **gekennzeichnet durch**
- ein Mittel (200, 210, 500) zum kontinuierlichen Ermitteln der kumulativen Anzahl von **durch** die Dosiereinheit eingespritzten Dosen (N),
- ein Mittel (200, 210, 500) zum kontinuierlichen Vergleichen der kumulativen Anzahl von eingespritzten Dosen (N) mit einem vorbestimmten numerischen Wert (TH), und
- ein Mittel (200, 210, 500) zum Bereitstellen einer Angabe, wenn die kumulative Anzahl von eingespritzten Dosen (N) den vorbestimmten numerischen Wert (TH) überschreitet.

8. SCR-System nach Anspruch 7, das ferner umfasst:
- ein Mittel (200, 210, 500) zum Ermitteln eines Bedarfs einer Instandsetzung der Ventilanordnung (350, 360) der Dosiereinheit, nachdem die Angabe bereitgestellt worden ist.

9. SCR-System nach Anspruch 7 oder 8, bei dem die kumulative Anzahl von eingespritzten Dosen (N) der Anzahl von Wechseln zwischen einem geöffneten Zustand und einem geschlossenen Zustand der Ventilanordnung (350, 360) der Dosiereinheit entspricht.

10. SCR-System nach einem der Ansprüche 7 bis 9, bei dem der vorbestimmte numerische Wert (TH) auf einer für die Ventilanordnung (350, 360) der Dosiereinheit bestimmten erwarteten Betriebslebensdauer basiert.

11. SCR-System nach einem der Ansprüche 7 bis 10, bei dem das Reduktionsmittel ein harnstoffbasiertes Reduktionsmittel ist.

12. SCR-System nach einem der Ansprüche 7 bis 11, bei dem die Dosiereinheit (250) in Form einer austauschbaren Einheit ausgebildet ist.

13. SCR-System nach einem der Ansprüche 7 bis 12, bei dem die Ventilanordnung (350, 360) in Form einer austauschbaren Einheit in der Dosiereinheit (250) ausgebildet ist.

14. Kraftfahrzeug (100, 110), das mit einem SCR-System nach einem der Ansprüche 7 bis 13 versehen ist.

15. Kraftfahrzeug (100, 110) nach Anspruch 14, wobei das Fahrzeug ein Lastkraftwagen, ein Bus oder ein Auto ist.

16. Computerprogramm (P) für SCR-Systeme zum Abgasreinigen, wobei das Programm (P) einen Programmcode umfasst, der in einem computerlesbaren Medium gespeichert ist, um eine elektronische Steuereinheit (200, 500) oder einen mit der elektronischen Steuereinheit (200, 500) verbundenen weiteren Computer (210, 500) dazu zu veranlassen, die Schritte nach einem der Ansprüche 1 bis 6 auszuführen.

17. Computerprogrammprodukt, das einen auf einem computerlesbaren Medium gespeicherten Programmcode umfasst, zum Ausführen der Verfahrensschritte nach einem der Ansprüche 1 bis 6, wenn das Computerprogramm auf einer elektronischen Steuereinheit (200, 500) oder einem mit der elektronischen Steuereinheit (200, 500) verbundenen weiteren Computer (210, 500) ausgeführt wird.

## Revendications

1. Procédé concernant un système de réduction catalytique sélective pour nettoyage d'échappement, par lequel un agent de réduction est délivré à un dispositif d'alimentation (230) qui délivre celui-ci à une unité de dosage (250) pour une délivrance par lots d'agent de réduction à l'aide d'un agencement de vanne (350, 360) en un point de consommation dans le système de réduction catalytique sélective, **caractérisé par** les étapes consistant à :
- déterminer de façon continue (s410) le nombre cumulé de doses injectées (N) par ladite unité de dosage (250),
- comparer de façon continue (s420, s430) ledit nombre cumulé de doses injectées (N) à une valeur numérique prédéterminée (TH), et
- délivrer une indication (s440) lorsque ledit nombre cumulé de doses injectées (N) dépasse ladite valeur numérique prédéterminée (TH).

2. Procédé selon la revendication 1, comprenant de plus les étapes consistant à :
- déterminer une nécessité de révision (450) de l'agencement de vanne (350, 360) de l'unité de dosage après que ladite indication a été délivrée.

3. Procédé selon la revendication 1 ou 2, dans lequel le nombre cumulé de doses injectées (N) correspond au nombre de commutations entre un état ouvert et un état fermé de l'agencement de vanne (350, 360) de l'unité de dosage.

4. Procédé selon l'une quelconque des revendications 1 à 3, dans lequel ladite valeur numérique prédéterminée (TH) est basée sur une durée de vie prévue déterminée pour l'agencement de vanne (350, 360) de l'unité de dosage.

5. Procédé selon l'une quelconque des revendications précédentes, dans lequel ledit agent de réduction est un agent de réduction à base d'urée.

6. Procédé selon l'une quelconque des revendications précédentes, comprenant de plus l'étape consistant à :
- changer ou rénover (s460) ladite unité de dosage (250) après que ladite indication a été délivrée.

7. Système de réduction catalytique sélective pour nettoyage d'échappement, par lequel un agent de réduction est délivré à un dispositif d'alimentation (230) qui délivre celui-ci à une unité de dosage (250) pour une délivrance par lots d'agent de réduction à l'aide d'un agencement de vanne (350, 360) en un point de consommation dans le système de réduction catalytique sélective, **caractérisé par** :
- des moyens (200 ; 210 ; 500) pour déterminer de façon continue le nombre cumulé de doses injectées (N) par ladite unité de dosage,
- des moyens (200 ; 210 ; 500) pour comparer de façon continue ledit nombre cumulé de doses injectées (N) à une valeur numérique prédéterminée (TH), et
- des moyens (200 ; 210 ; 500) pour délivrer une indication lorsque ledit nombre cumulé de doses injectées (N) dépasse ladite valeur numérique prédéterminée (TH).

8. Système de réduction catalytique sélective selon la revendication 7, comprenant de plus :
- des moyens (200 ; 210 ; 500) pour déterminer une nécessité de révision de l'agencement de vanne (350, 360) de l'unité de dosage après que ladite indication a été délivrée.

9. Système de réduction catalytique sélective selon la revendication 7 ou 8, dans lequel le nombre cumulé de doses injectées (N) correspond au nombre de commutations entre un état ouvert et un état fermé de l'agencement de vanne (350, 360) de l'unité de dosage.

10. Système de réduction catalytique sélective selon l'une quelconque des revendications 7 à 9, dans lequel ladite valeur numérique prédéterminée (TH) est basée sur une durée de vie prévue déterminée pour l'agencement de vanne (350, 360) de l'unité de dosage.

11. Système de réduction catalytique sélective selon l'une quelconque des revendications 7 à 10, dans lequel ledit agent de réduction est un agent de réduction à base d'urée.

12. Système de réduction catalytique sélective selon l'une quelconque des revendications 7 à 11, dans lequel ladite unité de dosage (250) prend la forme d'une unité remplaçable.

13. Système de réduction catalytique sélective selon l'une quelconque des revendications 7 à 12, dans lequel ledit agencement de vanne (350, 360) prend la forme d'une unité remplaçable dans ladite unité de dosage (250).

14. Véhicule à moteur (100 ; 110) muni d'un système de réduction catalytique sélective selon l'une quelconque des revendications 7 à 13.

15. Véhicule à moteur (100 ; 110) selon la revendication 14, ce véhicule étant l'un quelconque parmi un camion, un autobus ou une automobile.

16. Programme informatique (P) associé à des systèmes de réduction catalytique sélective pour nettoyage d'échappement, ce programme (P) comprenant un code de programme mémorisé sur un support lisible par ordinateur pour faire effectuer à une unité de commande électronique (200 ; 500) ou à un autre ordinateur (210 ; 500) connecté à l'unité de commande électronique (200 ; 500) des étapes selon l'une quelconque des revendications 1 à 6.

17. Produit de programme informatique comprenant un code de programme mémorisé sur un support lisible par un ordinateur pour réaliser des étapes de procédé selon l'une quelconque des revendications 1 à 6 lorsque ledit programme informatique est exécuté sur une unité de commande électronique (200 ; 500) ou un autre ordinateur (210 ; 500) connecté à l'unité de commande électronique (200 ; 500).
